# EUROPEAN PATENT SPECIFICATION

(11) **EP 2 666 626 B1**
(45) Date of publication and mention of the grant of the patent: **31.12.2014**
(21) Application number: 12004020.9
(22) Date of filing: 23.05.2012
(51) Int. Cl.: C09K 21/12, C08J 9/04, B32B 5/00, B32B 27/18

(54) **Flame-retardant polyolefin foam and its production**
Flammenhemmender Polyolefinschaum und seine Herstellung
Mousse de polyoléfine ignifuge et sa production

(43) Date of publication of application: 27.11.2013
(73) Proprietor: Sekisui Alveo AG, 6003 Luzern (CH)
(72) Inventor: Claessen, Ton, 6031 EM Nederweert (NL); Willemse, Remco, 6004 DA Weert (NL); Sigrist, André, 6280 Hochdorf (CH); Scholbe, Ulrich, 6005 Luzern (CH); Eberl, Joachim, 6005 Luzern (CH)
(74) Representative: Strehl Schübel-Hopf & Partner

(56) References cited:
- WO-A1-2012/028953
- US-A1- 2011 257 310
- US-A1- 2012 037 837

## Description

The present invention relates to a process for the production of a halogen-free, flame-retardant polyolefin foam and to a polyolefin foam obtainable by the process. As halogen-free flame-retardant a combination of a phosphorus compound and a 1,3,5-triazine compound is used. The produced flame-retardant polyolefin foam exhibits particular advantageous mechanical, physical and chemical properties which allow its application especially in the construction and transport sectors.

### Background of the Invention

Flame retardant polyolefin foams are commonly applied in various industrial fields like for example the construction or transport sectors including automotive, railroad and aircraft. Due to their advantageous chemical, physical and mechanical properties at low weight, like excellent chemical resistance, soft touch, high thermal resistance, fine and regular closed or semi-open or open cell structure, they are applied for example as floor underlay material, for thermal insulation, cushioning, and acoustic design materials. Especially in interior applications stringent safety and quality conditions are set up by national authorities or the original equipment manufacturers in order to assure a high level of human health and environment protection.

Currently the required level of flame-retardancy in polyolefin foam products is reached through the widely spread application of blends consisting of halocarbons and antimony trioxide. Commonly used additives include for example polychlorinated biphenyls (PCB), chlorendic acid derivates such as dibutyl chlorinated dimethyl chlorendate and chlorinated paraffins, organobromines such as polybrominated diphenyl ethers (PBDE) like pentabromodiphenyl ether (pentaBDE), octabromodiphenyl ether (octaBDE), decabromodiphenyl ether (decaBDE) and hexabromocyclododecane (HBCCD). All these substances have a negative effect on the environment and human health due to their persistent, bioaccumulative and toxic (PBT) properties. Therefore, their application is restricted or prohibited within the European Union for example by REACH regulation or RoHS directive

Also, sensitive industries, like automobile, railway, or aircraft, tend to ban all kinds of halogenated flame retardants for materials installed in the interior mainly due to the generation of hazard gases like dioxin derivatives and hydrogen acids upon combustion. Such hazard gases are also produced by halogen-containing organophosphates such as tris(2,3-dibromopropyl) phosphate (TRIS) or bis(2,3-dibromopropyl) phosphate.

In order to avoid these risks for environment and human health, alternative halogen-free additives have been developed and investigated. In the class of inorganic substances, certain metal oxides or hydroxides exhibited flame retardant properties, for example magnesium hydroxide or aluminium hydroxide, as disclosed for example in WO 2010/024601, WO 2004/074361, EP 1 059 330 B1, US 5,532,302 or US 4,983,663. However, the flame retardant efficiency of metal hydroxides embedded in polymer foams is lower compared to that of halocarbon additives. For reaching a similar efficiency an amount of 30-60 w% of metal hydroxides has to be added to the polymer which leads to undesired mechanical and physical properties of the foam like increase of tensile modulus (stiffness) and reduction of tensile elongation (brittleness). The effectiveness of these flame retardants has been improved for example by inclusion of char forming synergists, such as organic nanoclays, like bentonite and montmorillonite, as disclosed in US 2006/0217460 and in L. Ye et al. / Polym. Degrad. Stab. 94, p. 751 (2009). Efficiency could also be improved by application of small-sized metal hydroxide particles, as disclosed in EP 1 705 213, EP 1 528 083 or US 6,831,120. But all these approaches did not lead to an equal level of flame redardancy compared to halocarbons. Additionally, metal hydroxides are poorly compatible with polyolefin resins and they tend to aggregate within the polymer material. They also suffer from chemical reaction in highly humid environment because metal hydrates react with carbon dioxide present in the ambient air resulting in the generation of metal carbonates. These carbonates migrate on the surface and finally deposit which leads to the well-known whitening phenomenon.

Carbon-containing additives have also been established as halogen-free flame retardants. In US 2008/0171823 the application of carbon nanotubes in polymers such as polyurethane is disclosed. Expandable graphite is another example of important inorganic additives which is disclosed in US 4,722,945 for the application in flame-retardant latex foams. But also carbon-containing additives, suffer from high material load due to lower flame retardancy compared to halocarbons.

Another class of halogen-free flame retardant intended for the application as additives in polymer foams are organic phosphor-containing substances which exhibit better compatibility with the polymer matrix than metal hydroxides. This group comprises for example phosphates (like resorcinol diphenylphosphate as disclosed in US 5,958,993), phosphate esters (like oligomeric phosphate esters as disclosed in US 5,864,0049; (alkyl-substituted) triaryl phosphate esters as disclosed in WO 03/099919 A1; alkyl-substituted phosphate esters as disclosed in WO 2010/147710 A1 and US 4,565,833), ammonium dihydrogen phosphate (as disclosed in EP 2 151 473), phosphoramide esters (as disclosed in WO 2008/085926 A1), and phenylphosphenic acid derivatives together with carboxylic acids (as disclosed in US 7,919,541 B2). In WO 2005/021628 A2 the application of blends of phosphate ester and melamine is disclosed which is applied in the production of flame-retardant polyurethane foams. Those phosphor-containing additives suffer - equal to metal hydroxides - from their high load which is required to reach acceptable flame-retardant properties of polyolefin foams.

Another drawback in the field of flame retardant polyolefin foams results from particular burning properties required for example in applications of transportation industry. Most phosphorus-containing polymer foams show insufficient results in smoke density tests due to a high level of smoke evolution during burning. It is known that the application of inorganic halogen-free flame retardants reduces the evolution of smoke, as disclosed in WO 2004/056920 A2 for ammonium sulphate. Nevertheless, in EP 0 778 864 B1 phosphate esters and in US 5,994,435 flame retardants composed of ethylenediamine-containing zinc phosphate and other phosphor-containing compounds are disclosed, which even have a smoke-suppressing effect.

WO 2010/026230 A1 discloses a flame-retardant blend for polymers containing a 1,3,5-triazine compound and at least one phosphorus-containing compound. In a preferential embodiment it contains a blend of a phosphonate compound and a 1,3,5-triazine derivative. This document discloses a number of possible applications but does not specifically disclose a process for low-density foam production and a low-density foam itself.

US 2012/0037837 A1 describes a polyolefin-based resin of pre-expanded particles including a sterically hindered amine ether flame retardant and a phosphoric ester.

Another requirement for flame retardants results from the polyolefin foam production process. Due to the high temperatures present in the extruder and foaming oven, a particular level of thermal stability is required in order to maintain the desired level of flame retardancy in the final polyolefin foam product. In particular, EP 0 237 135 B1 discloses the application of tetraaryl alkylene diphosphonates which exhibit sufficient thermal stability for the production of polyolefin foams.

Besides the addition of inorganic or organic flame-retardant substances, a special plastic raw material has been developed: bishydroxydeoxybenoin (BHDB), which generates water when burned and therefore shows flame-retardant properties itself.

### Objects of the present invention

As described above, currently halogen-free flame retardants applied in the production of polyolefin foams require high loads of additive which results in impaired physical and mechanical properties compared to halocarbon-containing materials. It is, therefore, an object of the present invention to provide polyolefin foams including a quantity of halogen-free flame retardant which is equal to or lower than the amount of halocarbons usually applied. Simultaneously, an inacceptable degradation of mechanical and physical properties, such as tensile strength and tensile elongation, should be prevented.

In order to obtain a halogen-free flame-retardant foam, the used flame retardant should survive the applied production process, i.e. it should show stability concerning the application of high pressures and enhanced temperatures and it should not react with the applied ingredients. This means a further object of this invention is to implement a halogen-free flame retardant which withstands these conditions and yields the desired flame-retardant polyolefin foam.

As described above, many halogen-free flame retardants have to be added in a higher amounts compared to halocarbons to achieve good flame retardancy. This is associated with the disadvantage that a particular minimum density can not be underrun to upcoming instability of the foam structure in the production process. Applying halocarbons the lowest reachable density is currently 28 kg/m³. It is therefore a further object of the present invention to provide flame-retardant polyolefin foams with even lower density. Such foams show advantages concerning cost and environmental/health aspects. Lower weight means in general for example: less raw materials required for the production of the foam (= lower production costs), lower fuel consumption for vehicles (= lower cost at consumers), lower smoke density and toxicity in the case of combustion (= environmental/health aspect).

Additionally, current halogen-free flame-retardant polyolefin foams sometimes suffer from their unfavourable behaviour in current test methods and limitations set up by the transportation industry, e.g. as given in the Federal Motor Vehicle Safety Standards in particular FMVSS 302 or in the Federal Aviation Regulations in particular FAR 25.853. Existing flame-retardant foams show particularly the appearance of dangerous burning drops. It is a further object of the present invention that the foam shall continuously pass required tests and respect regulatory demands which shall assure a high-level of human health and environment protection.

### Detailed description of the present invention

The present invention describes a novel production process for the fabrication of cross-linked and non cross-linked halogen-free flame-retardant polyolefin foams.

Specifically, the present invention relates to processes for producing halogen-free flame-retardant polyolefin foams.

A general process of the present invention is as follows:

A process for producing a halogen-free flame-retardant polyolefin foam having a density of 100 kg/m³ or lower, comprising:
mixing (A) 0.001 to 95.0 parts by weight of an olefin polymer and/or olefin copolymer, (B) 5.0 to 99.999 parts by weight of a halogen-free flame-retardant, the total of (A) and (B) being 100 parts by weight, (C) 0.1 to 40 parts by weight of a foaming agent, and (D) 0-10 parts by weight of additives, and forming the mixture to a plate or a sheet,
and foaming the obtained plate or sheet to obtain a polyolefin foam, wherein the flame-retardant is a combination of a phosphorus compound and a 1,3,5-triazine compound.

The process can optionally comprise a step of cross-linking. The cross-linking may be performed simultaneously with the foaming.

In one embodiment, this method is conducted as a one-step foam extrusion comprising introduction of (A) 0.001 to 95.0 parts by weight of the olefin polymer and/or olefin copolymer; (B) 5.0 to 99.999 parts by weight of the halogen-free flame-retardant compound, the total of (A) and (B) being 100 parts by weight; and, in relation to 100 parts by weight of (A) and (B), (C) 0.1 to 40 parts by weight of a foaming agent, and (D) 0-10 parts by weight of additives into an extruder and foaming the obtained mixture while it exits the extruder. This process is a one-step process which means that the foaming is done when the mixture leaves the extruder and does not require a separate foaming step.

In another embodiment, this method is conducted as a batch foam process comprising the following steps:
a) introducing (A) 0.001 to 95.0 parts by weight of the olefin polymer and/or olefin copolymer; (B) 5.0 to 99.999 parts by weight of the halogen-free flame-retardant compound, the total of (A) and (B) being 100 parts by weight; and, in relation to 100 parts by weight of (A) and (B), (C) 0.1 to 40 parts by weight of a foaming agent, and (D) 0-10 parts by weight of additives including 0.1 - 1.5 parts by weight of a chemical cross-linker into a mixer or an extruder; and
b) then foaming the batch which includes the chemical cross-linker, to obtain a foamed any cross-linked polyolefin foam sheet or plate. In this process, portions (batches) of the mixture obtained in step a) are foamed and simultaneously cross-linked in a separate step b).

A preferable (three step) process of the present invention particularly for achieving low-density foams comprises the following steps:
a) introducing (A) 0.001 to 95.0 parts by weight of olefin polymer and/or olefin copolymer; (B) 5.0 to 99.999 parts by weight of the halogen-free flame-retardant compound, the total of (A) and (B) being 100 parts by weight; and, in relation to 100 parts by weight of (A) and (B), (C) 0.1 to 40 parts by weight of a foaming agent, and (D) 0 - 10 parts by weight of additives into an extruder, and extruding the mixture to obtain an extruded sheet;
b) cross-linking the obtained extruded sheet; and
c) foaming the cross-linked sheet.

This latter described process is particularly preferred for producing halogen-free flame-retardant polyolefin foams with low density, such as 50 kg/m³ or lower and even lower than 28 kg/m³.

In the processes of the present invention, particularly the three-step process for obtaining low-density polyolefin foams, the concentration of flame-retardant compound is preferably from 5.0 to 50.0 parts by weight, preferably from 5.0 to 30.0 parts by weight, more preferably from 5.0 to 20.0 parts by weight, and most preferably from 6 to15 parts by weight, based on the total of the olefin polymer and/or olefin copolymer (A) and the flame retardant (B). In the present invention, additional selected synergists may be included which, within the ranges mentioned above, may further reduce the amount of flame-retardant required significantly.

The concentration of the olefin polymer and/or copolymer, particularly in the process for obtaining low-density polyolefin foams, ranges preferably from 50.0 to 95.0 parts by weight, more preferably from 70.0 to 95.0 parts by weight, more preferably from 80.0 to 95.0 parts by weight, most preferably from 85.0 to 94.0 parts by weight, based on the total of the olefin polymer and/or olefin copolymer (A) and the flame retardant (B).

The flame-retardant compound in the processes of the present invention comprises a phosphorus-containing compound (phosphorus compound) and a 1,3,5-triazine compound. The phosphorus compound is preferably a phosphonate having a flame-retarding effect. In a more preferred embodiment, the phosphorus compound is ammonium polyphosphate and/or a compound or a mixture of two or more chemical compounds selected from the group consisting of
a) one or more phosphonate compound(s) of the Formula 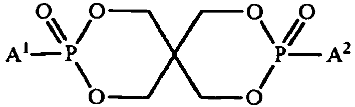 where A¹ and A² independently denote a substituted or unsubstituted, straight or branched chain alkyl group having 1 to 4 carbon atoms, substituted or unsubstituted benzyl, substituted or unsubstituted phenyl, or substituted or unsubstituted naphthyl, and
b) one or more phosphonate compound(s) of the following Formula 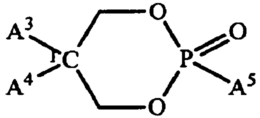 where A³ and A⁴ independently denote methyl or ethyl and A⁵ denotes a straight or branched chain alkyl group having 1 to 4 carbon atoms or a phenyl or benzyl group having up to 3 methyl groups respectively, and
c) alkyl or arylphosphonic acids, where alkyl denotes a straight or branched chain alkyl group having 1 to 4 carbon atoms, and aryl denotes a substituted or unsubstituted benzyl, substituted or unsubstituted phenyl, substituted or unsubstituted naphthyl, or a salt or ester of the aforementioned phosphonic acid.

It is further preferred that the 1,3,5-triazine compound is a 1,3,5-triazine compound or a mixture of two or more 1,3,5-triazine compound(s) selected from tris-2-hydroxyethyl isocyanurate, melamine, melamine cyanurate, melamine phosphate, poly-[2,4-(piperazin-1,4-yl)-6-(morpholin-4-yl)-1,3,5-triazine], dimelamine phosphate, melamine pyrophosphate, and hindered amine compounds of Formula I, II, IIA, and III:

R₁NH-CH₂CH₂CH₂NR₂CH₂CH₂NR₃CH₂CH₂CH₂NHR₄ (I)

T-E₁-T₁ (II)

T-E₁ (IIA)

G-E₁-G₁-E₁-G₂ (III),

where in the tetraamine of Formula I
R₁ and R₂ denote the s-triazine moiety E, and one of R₃ and R₄ denotes the s-triazine moiety E, with the other of R₃ or R₄ denoting a hydrogen,
E denotes 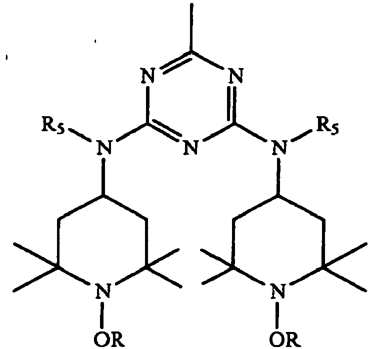 R denotes methyl, cyclohexyl or octyl,
R₅ denotes an alkyl having 1 to 12 carbon atoms,
where in the compound of Formula II or IIA, if R denotes cyclohexyl or octyl, each of T and T₁ denotes a tetraamine substituted by R₁-R₄ as defined in Formula I, where
(1) one of the s-triazine moieties E in each tetraamine is replaced by the group E₁, which forms a bridge between two tetraamines T and T₁, or
(2) the group E₁ can have both terminals in the same tetraamine T as in Formula IIA, where two of the E moieties of the tetraamine are replaced by one E₁ group, or
(3) all three s-triazine substituents of tetraamine T can denote E₁, such that one E₁ residue comprises the bond between T and T₁ and a second E₁ residue has both terminals in tetraamine T,
and
E₁ denotes

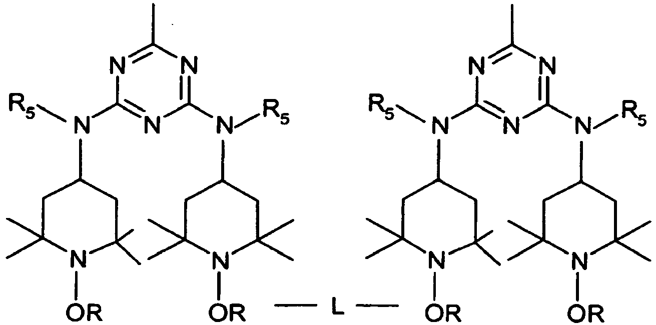

Such specific phosphorus compounds and triazine compounds are disclosed in WO 2010/026230 which are herewith incorporated by reference as preferred flame-retardant combinations for producing low density polyolefin foams. The preferred compounds disclosed in WO 2010/026230 are also preferred in the present invention. It was surprising that by using this specific combination of compounds, low-density foams could be obtained, particularly in the preferred three step process described above for producing low-density polyolefin foams. The present invention is also directed to the foams obtained by a process of the present invention using these flame retardant components. In this respect, a particularly preferred combination is a combination where the phosphorous compound is a) one or more phosphonate compound(s) of the Formula 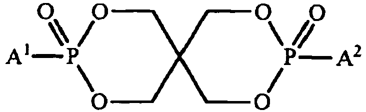 where A¹ and A² independently denote a substituted or unsubstituted, straight or branched chain alkyl group having 1 to 4 carbon atoms, substituted or unsubstituted benzyl, substituted or unsubstituted phenyl, or substituted or unsubstituted naphthyl, and/or
b) one or more phosphonate compound(s) of the following Formula 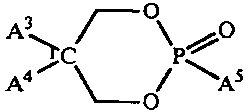 where A³ and A⁴ independently denote methyl or ethyl and A⁵ denotes a straight or branched chain alkyl group having 1 to 4 carbon atoms or a phenyl or benzyl group having up to 3 methyl groups respectively. Most preferably, this/these phosphonate(s) is/are combined with the 1,3,5-triazine compound described in detail above (or in claim 1 of WO 2010/026230).

In a further preferred embodiment herein, the phosphonate a) is a compound having the following formula:

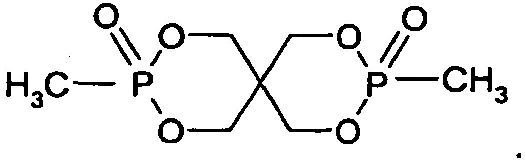

Further preferred, the flame-retardant blend additionally comprises N,N',N"'-tris{2,4-bis[(1-hydrocarbyloxy-2,2,6,6-tetramethylpiperidin-4-yl)alkylamino]-s-triazin-6-yl}-3,3'-ethylenediiminodipropylamine and N,N',N"-tris-{2,4-bis[(1-hydrocarbyloxy-2,2,6,6-tetramethylpiperidin-4-yl) alkylamino]-s-triazin-6-yl}-3,3'-ethylenediiminodipropylamine.

The kind of polyolefin in the present invention is not particularly limited and can be a homopolymer of a monomer, and/or a copolymer. For example, the following can be preferably used: a polyethylene-based polymer; a polypropylene-based polymer; an olefin copolymer such as an ethylene-vinyl acetate copolymer (EVA), an ethylene-methyl acrylate copolymer (EMA), and an ethylene-butyl acrylate copolymer (EBA), EPDM, and a polyethylene/polypropylene rubber. A polyolefin-based polymer having, as a main component, a polyethylene-based polymer, a polypropylene-based polymer, or a mixture of a polyethylene-based polymer and a polypropylene-based polymer is preferable. A main component means that one of the polyethylene-based polymer and the polypropylene-based polymer, or both of them are contained in the polyolefin-based polymer at a total amount 50 % by weight or more.

The polyethylene-based polymer is not particularly limited, and examples include very low density polyethylene (VLDPE), low density polyethylene (LDPE), medium density polyethylene, high density polyethylene (HDPE), linear low density polyethylene (LLDPE), linear medium density polyethylene, and linear high density polyethylene, and these may be used alone, or may be used together.
In addition, the polypropylene-based polymer is not particularly limited, but examples include a propylene homopolymer, and a copolymer of propylene and other olefin, and these may be used alone, or two or more kinds of them may be used together. In addition, a copolymer of propylene and other olefin may be any of a block copolymer, a random copolymer, and a random block copolymer.
In addition, examples of olefin to be copolymerized with propylene include α-olefins such as ethylene, 1-butene, 1-pentene, 4-methyl-1-pentene, 1-hexene, 1-octene, 1-nonene, and 1-decene.
Preferred types of polymers are PE, PP and EVA copolymers. In a preferred embodiment, the component (A) is a mixture of polyethylene and EVA.

The total concentration of all additives, including the foaming agent, ranges from 0.1 to 50 parts by weight in relation to 100 parts by weight of the total of (A) and (B), in a preferential embodiment from 0.5 to 30 parts by weight.

A required component is the foaming agent (component (C)).
The type of foaming agent is not particularly restricted. Examples of foaming agents which can be used in the present invention are azodicarbonamide, citric acid, sodium bicarbonate, water, water vapour, ethane, methane, propane, butane, pentane, hexane, heptanes, octane, carbon dioxide, nitrogen, their derivatives and other components commonly used for the production of foams. A preferred foaming agent in the process of the present invention is azodicarbonamide, particularly if the process comprises a cross-linking step, and iso-butane, carbon dioxide and nitrogen is preferred for the case comprising no cross-linking step.

The foaming agent is used in an amount of 0.1 to 40.0 parts by weight based on the total of components (A) and (B), preferably 0.5 to 20.0 parts by weight.

Besides the foaming agent, other additives can be applied to control the rheological properties of the melt (lubricants) such as zinc stearates, glycol monostearates and similar derivatives, erucamide and similar derivatives, low molecular weight waxes and similar derivatives, fluorinated polymers and similar derivatives. The use of such lubricants is preferable since they contribute to avoid prefoaming when the mixture leaves the extruder.

Lubricants are preferably used in an amount of 0.01 to 5.0 parts by weight based on the total of components (A) and (B), preferably 0.1 to 3.0 parts by weight.

Other additives can be applied to control the colour of the foams (coloring agents). Coloring agents are preferably used in an amount of 0.01 to 5.0 parts by weight based on the total of components (A) and (B), preferably 0.1 to 3.0 parts by weight.

Still other additives can be applied to stabilize the foam, such as radical stabilizers, antioxidants, UV-stabilizers, heat-stabilizers as well as fire retardants and promoters of electrical or thermal conductivity. These additives are preferably used in an amount of 0.01 to 40.0 parts by weight based on the total of components (A) and (B), preferably 0.05 to 30.0 parts by weight.

The production process is preferably based on the extrusion of a mixture comprising the polymer resin, the flame-retardant compound, the foaming agent and possibly other additives to obtain an extruded sheet or crude sheet.

The apparatus for performing the extrusion is not particularly limited. Examples for the extruder are single-screw and twin-screw extruders. Examples of their application methods are film extrusion, blown film extrusion, overjacketing extrusion, tubing extrusion, coextrusion and extrusion coating. Preferred is single-and twin-scew extrusion.

The extrusion process is used to thoroughly mix the flame retardant with the foaming agent, the optional other additives, and the olefin homopolymer and/or copolymer. The olefin homopolymer and/or copolymer is general added to the extruder in the form of granulates. In one embodiment of the process of the present invention, the extrusion should preferably be performed under such conditions that no or essentially no prefoaming occurs when the extruded mixture leaves the extruder as a sheet. To this end, the addition of above mentioned lubricants is preferable.

The extrusion in the present invention is generally performed at a temperature of from 110°C to 200°C. A preferred temperature range is from 130 to 150 °C. The pressure of extrusion is generally from 40 to 110 bar. A preferred pressure range is from 75 to 90 bar.

The production process of the halogen-free flame-retardant foam preferably, but not necessarily, includes a cross-linking step after the extrusion and prior to the foaming process for cross-linking the polymer chains. The cross-linking can be a chemical cross-linking or a physical cross-linking. Physical cross-linking is preferred. The methods of physical cross-linking and chemical cross-linking described in WO 2006/043570 can generally be applied.

In physical cross-linking, the extruded sheet is irradiated with radiation such as an electron beam to impart a cross-linked structure to the extruded sheet. γ-radiation is another possibility. When electron irradiation is used as a means for imparting a cross-linked structure to the extruded sheet, a foamed sheet obtained by foaming the extruded sheet has fine closed cells and, at the same time, an excellent surface smoothness.

If the irradiation dose of an electron beam to the crude sheet is too small, a necessary cross-linked structure cannot be imparted to the extruded sheet in some cases. On the other hand, when the dose is too large, cross-linking is applied too much to the extruded sheet, and foamability of the extruded sheet is reduced in some cases. Therefore, the dose is preferably 0.1 to 30 Mrad, more preferably 0.2 to 20 Mrad, particularly preferably 0.3 to 15 Mrad.

When irradiation doses mentioned above are applied, cross-linking levels are obtained which enables proper foaming of the sheets produced by the preferred process. In the present invention, crosslinking levels have to be within the range from 0 to 80 %, and preferably between 20 and 60 %, determined by the gel test method described in ASTM 2765-2001.

In addition, an acceleration voltage for electron beam may be appropriately adjusted depending on the thickness of the extruded sheet, and an electron beam may be irradiated on only one side or both sides of the extruded sheet. In order to uniformly cross-link the extruded sheet in its thickness direction, it is preferable to irradiate both sides of the extruded sheet with an electron beam at the same acceleration voltage and the same irradiation dose.

In the foaming step, the extruded sheet may be heated to a temperature at which the foaming agent decomposes or expands, or foaming may occur through decompression in an autoclave or press. Thereby, a foamed sheet comprising the halogen-free flame retardant and a polyolefin polymer is produced exhibiting a processing skin layer on both sides of this foamed sheet.

The foaming step is generally performed at a temperature of from 120 to 350°C, preferably 150 to 250 °C, more preferably from 200 to 250 °C at atmospheric pressure (1 bar) in case an extruder is used to obtain an extruded sheet such as in the three step process for producing low-density polyolefin foams, or at a temperature of from 50 to 250°C, preferably 150 to 200°C at pressures in the range of 10 to 250 bar in case of using an autoclave.

Instead of physical cross-linking as described above which is performed after extrusion, chemical cross-linking may be applied simultaneously with the foaming step. In that case the chemical cross-linking substance may serve also as foaming agent. Usually the raw bun is cross-linked and foamed in a heated press. Suitable chemical cross-linking substances to this end are for example organic peroxides or silanes.

As a possibility of conducting the process of the present invention for producing halogen-free flame-retardant polyolefin foams, direct extrusion foaming can be applied. Therefore, preferably a mixture comprising (A) 10.0 to 40.0 parts by weight of flame-retardant compound, (B) 60.0 to 90.0 parts by weight of an olefin polymer and/or olefin copolymer, the total of (A) and (B) being 100 parts by weight, and (D) 0-5 parts by weight of additive masterbatch is processed in the extruder. At the end of the extruding device, prior to the extrusion die, (C) 0.1 - 15 parts of foaming agent are injected into the melt. Finally, the flame-retardant foam according to the invention is directly generated after exiting the die's outlet. Thus, it is not necessary in the process of the present invention that all components to be mixed are admixed at the entrance of the extruder, but the foaming agent could be added just before the exit of the extruder.

With the process of the present invention, foams with a density of 100 kg/m³ or lower, such as 5 kg/m³ to 100 kg/m³, preferably from 10 kg/m³ to 100 kg/m³, even more preferred from 10 kg/m³ to 70 kg/m³, can be obtained. However, it is a particular advantage of the present invention that halogen-free flame-retardant polyolefin foams having a density of 10 to 50 kg/m³, and particularly preferred of 28 kg/m³ or lower can be obtained while not impairing mechanical properties like tensile elongation. The foams are therefore particularly suitable for applications in the transport sector, like automotive or aircraft, and construction sector where low density (low weight) and at the same time superior mechanical and flame retardant properties are required.

The present invention thus also relates to halogen-free flame-retardant polyolefin foam obtainable by the process of the present invention.

The thickness of the foam obtained by the process of the present invention can be in a wide range and is generally in a range of from 0.1 to 40 mm, in a preferred embodiment from 0.5 to 10 mm.

The thickness tolerance ranges between 0.5 and 20 %, in a preferred embodiment between 2 and 15 %. The thickness of the foam is determined in accordance to ISO-1923. The thickness tolerances are based on 10 individual measurements in cross-direction of the foam and on the statistical basis of 3 sigma tolerances.

The flame-retardant polyolefin foam produced according to the present invention generally has an average cell size of from 0.01 to 5 mm, preferably 0.05 to 2 mm, more preferably from 0.1 to 1 mm. The cell size is determined through optical or electron microscopy or any imaging method known to the skilled person. The cell size and cell size distribution is determined based on 100 individual measurements and on the statistical basis of 3 sigma tolerances.

The flame-retardant polyolefin foam according to the present invention can be produced in the form of a sheet, block, plate, tube or profiles of any shape or film. Further, it can be formed into a roll which has advantages for transport and for applying the foam.

The flame-retardant polyolefin foam according to the present invention can be produced as continuous sheets, but can also be cut to predetermined lengths.

The present invention also relates to a laminate containing the flame retardant polyolefin foam of the present invention or produced according to the method of the present invention as at least one layer. The bonding of the polyolefin flame-retardant foam layer to other layers may be reached by direct using heat, for example by flame lamination, or the bonding may be achieved via an adhesion promoter such as a pressure-sensitive adhesive, primers, sealants or adhesive tapes. Another method to obtain such laminates is co-extrusion or extrusion coating.

The flame-retardant polyolefin foam according to the present invention meets the requirements of various burning tests important for the transportation and construction sector. This includes - amongst others, and not limited to - for the transportation sector the horizontal burning test according to ISO 3795 (FMVSS 302); the 12s vertical test, the radiant panel test and the smoke density test in flaming and non flaming mode according to FAR 25.853 as well as UL94-VF and UL94-HF and IMO (International Maritime Organisation) FTP Code Part 2 ISO 5659. Particularly no burning drops occur.

In the construction sector the flame retardant passes burning tests comprising - amongst other, not limited to - fire classification of construction products and building elements EN 13501, DIN 4102; NBS smoke chamber test ASTM E 662, ASTM E84, NFPA (National Fire Protection Association) 258; Limited Oxygen Index (LOI) ISO 4589-2 and ASTM 2863; smoke classification F according to NF F 16-101.

Due to the obtained advantageous values of tensile strength and tensile elongation, the halogen-free flame-retardant foam according to the present invention is preferably applicable for example as thermal and acoustical insulation, sealing against water, moisture, air and dust as well as for damping or shock absorption.

Therefore, the flame-retardant polyolefin foam can be used in a wide range of transportation applications in particular as die cut gaskets for mirrors, lamps and gap fillers. More examples are thermoformed parts like airducts and watershields. Also acoustically effective materials like thermoformed and/or die cut absorbers for car interiors and engine compartments can be produced with the flame-retardant polyolefin foam according to the present invention.

In the aircraft, shipbuilding and railway industry the foam can be used as thermal insulation for the cabin walls, water system, gaskets in general and interior linings.

In the construction industry the halogen-free flame-retardant foam may be applied as pipe/tank/air duct insulation, as building insulation in floors, walls or roofs, as tunnel insulation, or as filler profiles.

### Examples

### Comparative Example 1: halogen-containing flame retardant

By applying the three step process described above, 85 parts by weight of a commercial LDPE with a MFI of 4 g/10 min (190 °C, 2.16kg) were mixed with 15 parts by weight of a polybrominated biphenyl derivative/antimony trioxide mixture (m/m = 2/1), 15 parts by weight of azodicarbonamide, the total of LDPE and foaming agent being 100 parts by weight, 0.6 parts of zinc oxide, 0.1 parts of pentaerythritol tetrakis(3,5-di-tert-butyl-4-hydroxyhydrocinnamate) (Irganox^{®} 1010) and 1.3 parts other additives like zinc stearate. The crude material was extruded in a twin-screw extruder applying a flat dye at a temperature of 140°C and a flow rate of 380 kg/h. The obtained sheet (thickness ca. 3.3 mm) was cross-linked by electron beam radiation yielding a gel fraction of 40 %. Finally the cross-linked sheet was foamed at 240°C and a flow rate of 325 kg/h to give a foam product showing a density of 33 kg/m³ and a thickness of 10 mm.

### Comparative Example 2: metal hydroxide flame retardant

By applying the three step process, 51 parts by weight of a commercial LDPE with a MFI of 4 g/10 min (190°C, 2.16kg) were mixed with 49 parts by weight of magnesium hydroxide 18 parts by weight of azodicarbonamide, the total of LDPE and foaming agent being 100 parts by weight, and 0.1 parts of zinc oxide, 0.1 parts of pentaerythritol tetrakis(3,5-di-tert-butyl-4-hydroxyhydrocinnamate) (Irganox^{®} 1010) and 1.8 parts other additives like zinc stearate. The blend was extruded in a twin-screw extruder applying a flat dye at a temperature of 140°C and a flow rate of 200 kg/h. The obtained sheet (thickness ca. 2 mm) was cross-linked by electron beam radiation yielding a gel fraction of 57 %. Finally the cross-linked sheet is foamed at 240°C and a flow rate of 320 kg/h to give a foam product showing a density of 30 kg/m³ and a thickness of 7 mm.

### Example 1

By applying the three step process described above, 90 parts by weight of a commercial LDPE with a MFI of 4 g/10 min (190 °C, 2.16kg) were mixed with 10 parts by weight of a phosphor-nitrogen-containing flame-retardant containing a blend of phosphonate compound and 1,3,5-triazine derivative (tradename Afflamit® PCO 800 manufactured by Thor GmbH, Germany), 20 parts by weight of azodicarbonamide, the total of LDPE and foaming agent being 100 parts by weight, and 0.2 parts of zinc oxide, 0.2 parts of pentaerythritol tetrakis(3,5-di-tert-butyl-4-hydroxyhydrocinnamate) (Irganox^{®} 1010) and 3.6 parts other additives like zinc stearate. The blend was extruded in a twin-screw extruder applying a flat dye at a temperature of 140°C and a flow rate of 250 kg/h. The obtained sheet (thickness ca. 3.2 mm) was cross-linked by electron beam radiation yielding a gel fraction of 50 %. Finally the cross-linked sheet is foamed at 240°C and a flow rate of 350 kg/h to give a foam product showing a density of 26 kg/m³ and a thickness of 10 mm.

### Example 2

By applying the three step process described above, 84 parts by weight of a commercial LDPE with a MFI of 4 g/10 min (190°C, 2.16kg) was mixed with 16 parts by weight of a phosphor-nitrogen-containing flame-retardant containing a blend of phosphonate compound and 1,3,5-triazine derivative (Afflamit ® PCO 800 manufactured by Thor GmbH, Germany), 26 parts by weight of azodicarbonamide, the total of LDPE and foaming agent being 100 parts by weight, and 0.2 parts of zinc oxide, 0.2 parts of pentaerythritol tetrakis(3,5-di-tert-butyl-4-hydroxyhydrocinnamate) (Irganox^{®} 1010) and 3.6 parts other additives like zinc stearate. The blend is extruded in a twin-screw extruder applying a flat dye at a temperature of 140°C and a flow rate of 250kg/h. The obtained sheet (thickness ca. 3.2 mm) was cross-linked by electron beam radiation yielding a gel fraction of 48 %. Finally the cross-linked sheet was foamed at 240°C and a flow rate of 350 kg/h to give a foam product showing a density of 20 kg/m³ and a thickness of 11 mm.

**Tab. 1: List of properties of obtained example foams**

| | **Amount of flame retardant (in wt%)** | **Density (in kg/m³)** | **Tensile elongation (Index⁽¹⁾ in %)** | **Meets the requirements of** |
|---|---|---|---|---|
| **Comparative example 1** | 12 (halogenated) | 33 | 96 | ISO 3795 |
| | | | | EN 13501/DIN 4102 |
| **Comparative example 2** | 40 (metal hydroxide) | 30 | 73 | ISO 3795 |
| **Example 1** | 8 | 26 | 100 | ISO 3795 |
| | | | | EN 13501/DIN 4102 |
| **Example 2** | 12 | 20 | 100 | ISO 3795 |
| | | | | EN 13501/DIN 4102 |
| | | | | FAR 25.853 |

| | | | | |
|---|---|---|---|---|
| ⁽¹⁾ Tensile elongations given in Tab. 1 are index values calculated as ratio of foam including flame-retardant additive and foam without flame-retardant additive. | | | | |

The examples show that low-density, halogen-free and flame-retardant polyolefin foams could be obtained while a deterioration of tensile elongation usually found when the density is reduced, can be avoided (Comparison Example 1 vs. Example 2). Comparative 1 vs. Example 2 shows that good flame retardant properties, and improved tensile elongation can be achieved even when the amount of flame retardant is reduced.

## Claims

1. A process for producing a halogen-free flame-retardant polyolefin foam having a density of 100 kg/m³ or lower, comprising:
mixing (A) 0.001 to 95.0 parts by weight of an olefin polymer and/or olefin copolymer, (B) 5.0 to 99.999 parts by weight of a halogen-free flame-retardant, the total of (A) and (B) being 100 parts by weight, (C) 0.1 to 40 parts by weight of a foaming agent, and (D) 0-10 parts by weight of additives, and forming the mixture to a plate or a sheet,
and foaming the obtained plate or sheet to obtain a polyolefin foam, wherein the flame-retardant is a combination of a phosphorus compound and a 1,3,5-triazine compound,
wherein the process optionally comprises a step of cross-linking which may be performed simultaneously with the foaming.

2. A process according to claim 1, wherein the mixing is performed in an extruder, the optional cross-linking is not performed simultaneously with the foaming, and the foaming is performed while the mixture leaves the extruder.

3. A process according to claim 1, comprising:
a) introducing the components (A), (B), (C) and, if present, (D) into an extruder, and extruding the mixture to obtain an extruded sheet;
b) cross-linking the obtained extruded sheet; and
c) foaming the cross-linked sheet.

4. A process according to any one of the preceding claims, wherein the amount of the flame retardant (B) is from 5 to 30 parts by weight, preferably from 5 to 20 parts by weight, more preferably from 6 to 15 parts by weight.

5. A process according to any one of the preceding claims, wherein the amount of the olefin polymer and/or olefin copolymer (A) is from 70 to 95 parts by weight, preferably from 80 to 95 parts by weight, more preferably from 85 to 94 parts by weight.

6. A process according to any one of the preceding claims, wherein the density of the obtained polyolefin foam is from 5 to 50 kg/m³, more preferably from 10 to 28 kg/m³_{.}

7. A process according to any one of the preceding claims, wherein the phosphorus compound is ammonium polyphosphate and/or a compound or a mixture of two or more chemical compounds selected from the group consisting of
a) one or more phosphonate compound(s) of the Formula 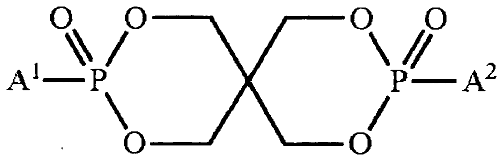 where A¹ and A² independently denote a substituted or unsubstituted, straight or branched chain alkyl group having 1 to 4 carbon atoms, substituted or unsubstituted benzyl, substituted or unsubstituted phenyl, or substituted or unsubstituted naphthyl, and
b) one or more phosphonate compound(s) of the following Formula 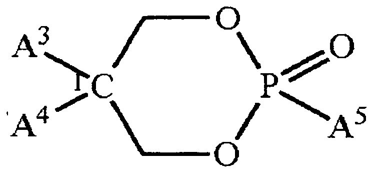 where A³ and A⁴ independently denote methyl or ethyl and A⁵ denotes a straight or branched chain alkyl group having 1 to 4 carbon atoms or a phenyl or benzyl group having up to 3 methyl groups respectively, and
c) alkyl or arylphosphonic acids, where alkyl denotes a straight or branched chain alkyl group having 1 to 4 carbon atoms, and aryl denotes a substituted or unsubstituted benzyl, substituted or unsubstituted phenyl, substituted or unsubstituted naphthyl, or a salt or ester of the aforementioned phosphonic acid.

8. A process according to any one of the preceding claims, wherein the 1,3,5-triazine compound is a 1,3,5-triazine compound or a mixture of two or more 1,3,5-triazine compound(s) selected from tris-2-hydroxyethyl isocyanurate, melamine, melamine cyanurate, melamine phosphate, poly-[2,4-(piperazin-1,4-yl)-6-(morpholin-4-yl)-1,3,5-triazine], dimelamine phosphate, melamine pyrophosphate, and hindered amine compounds of Formula I, II, IIA, and III:
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III),
where in the tetraamine of Formula I
R₁ and R₂ denote the s-triazine moiety E, and one of R₃ and R₄ denotes the s-triazine moiety E, with the other of R₃ or R₄ denoting a hydrogen,
E denotes 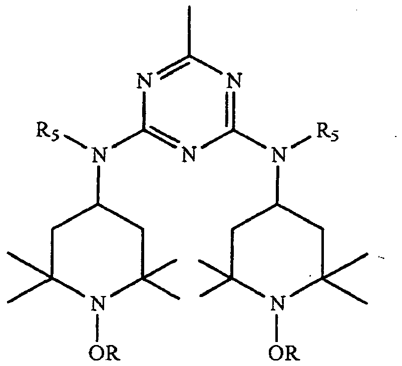 R denotes methyl, cyclohexyl or octyl,
R₅ denotes an alkyl having 1 to 12 carbon atoms,
where in the compound of Formula II or IIA, if R denotes cyclohexyl or octyl, each of T and T₁ denotes a tetraamine substituted by R₁-R₄ as defined in Formula 1,
where
(1) one of the s-triazine moieties E in each tetraamine is replaced by the group E₁, which forms a bridge between two tetraamines T and T₁, or
(2) the group E₁ can have both terminals in the same tetraamine T as in Formula IIA, where two of the E moieties of the tetraamine are replaced by one E₁ group, or
(3) all three s-triazine substituents of tetraamine T can denote E₁, such that one E₁ residue comprises the bond between T and T₁ and a second E₁ residue has both terminals in tetraamine T,
and
E₁ denotes

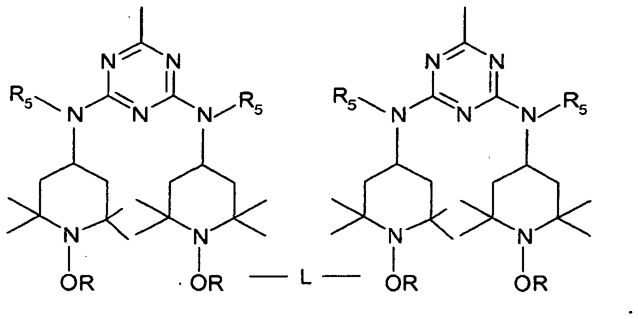

9. A process according to claim 7 or 8, wherein the phosphorus compound is a phosphonate compound as defined in part a) of claim 7 and/or a compound as defined in part b) of claim 7.

10. A polyolefin foam obtainable by the process according to any one of claims 1 to 9.

11. A low-density, halogen-free, flame-retardant polyolefin foam according to claim 10, having a density of 50 kg/m³ or lower, preferably 28 kg/m³ or lower.

12. The polyolefin foam according to claim 10 or 11, wherein the phosphorus compound is defined as in claim 7 or 9, and the triazine compound is defined as in claim 8.

13. The polyolefin foam according to any one of claims 10 to 12, wherein the foam is present in the form of a sheet, block, plate or film, which can be present in the form of a roll, respectively.

14. A laminate comprising the polyolefin foam according to any one of claims 10 to 13 as at least one layer.

15. Use of the foam according to any one of claims 10 to 13 for sound absorption, shock absorption, damping, insulation or soft touch applications, particularly in automobiles, aircrafts and in the construction sector.

16. Use according to claim 15, wherein the foam is used as a lining, arm rest, seal, door panel, instrument panel, underlay for floors, wall insulation or tube insulation.

## Patentansprüche

1. Verfahren zur Herstellung eines halogenfreien flammhemmenden Polyolefinschaums mit einer Dichte von 100 kg/m³ oder niedriger, umfassend:
Mischen von (A) 0,001 bis 95,0 Gewichtsteilen eines Olefinpolymers und/oder Olefincopolymers, (B) 5,0 bis 99,999 Gewichtsteilen eines halogenfreien Flammschutzmittels, wobei die Gesamtheit von (A) und (B) 100 Gewichtsteile ist, (C) 0,1 bis 40 Gewichtsteilen eines Schäumungsmittels und (D) 0-10 Gewichtsteilen von Additiven und Formen des Gemischs zu einer Platte oder einer Folie/Bahn,
und Schäumen der erhaltenen Platte oder Folie/Bahn, um einen Polyolefinschaum zu erhalten,
wobei das Flammschutzmittel eine Kombination einer Phosphorverbindung und einer 1,3,5-Triazinverbindung ist,
wobei das Verfahren wahlweise einen Schritt des Vernetzens umfasst, welcher gleichzeitig mit dem Schäumen durchgeführt werden kann.

2. Verfahren nach Anspruch 1, wobei das Mischen in einem Extruder durchgeführt wird, das optionale Vernetzen nicht gleichzeitig mit dem Schäumen durchgeführt wird, und das Schäumen durchgeführt wird, während das Gemisch den Extruder verlässt.

3. Verfahren nach Anspruch 1, umfassend:
a) Einführen der Komponenten (A), (B), (C) und, falls vorliegend, (D) in einen Extruder und Extrudieren des Gemischs, um eine extrudierte Folie/Bahn zu erhalten;
b) Vernetzen der erhaltenen extrudierten Folie/Bahn; und
c) Schäumen der vernetzten Folie/Bahn.

4. Verfahren nach einem der vorhergehenden Ansprüche, wobei die Menge des Flammschutzmittels (B) von 5 bis 30 Gewichtsteilen, bevorzugt von 5 bis 20 Gewichtsteilen, bevorzugter von 6 bis 15 Gewichtsteilen, beträgt.

5. Verfahren nach einem der vorhergehenden Ansprüche, wobei die Menge des Olfefinpolymers und/oder Olefincopolymers (A) von 70 bis 95 Gewichtsteile beträgt, bevorzugt von 80 bis 95 Gewichtsteile, bevorzugter von 85 bis 94 Gewichtsteile.

6. Verfahren nach einem der vorhergehenden Ansprüche, wobei die Dichte des erhaltenen Polyolefinschaums von 5 bis 50 kg/m³ beträgt, bevorzugter von 10 bis 28 kg/m³.

7. Verfahren nach einem der vorhergehenden Ansprüche, wobei die Phosphorverbindung ein Ammoniumpolyphosphat ist und/oder eine Verbindung oder ein Gemisch von zwei oder mehreren chemischen Verbindungen, ausgewählt aus der Gruppe, bestehend aus
a) einer oder mehreren Phosphonatverbindung(en) der Formel 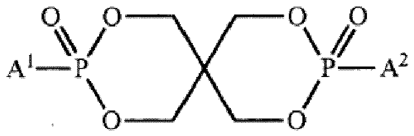 wobei A¹ und A² unabhängig eine substituierte oder unsubstituierte, gerade oder verzweigtkettige Alkylgruppe mit 1 bis 4 Kohlenstoffatomen, ein substituiertes oder unsubstituiertes Benzyl, substituiertes oder unsubstituiertes Phenyl oder substituiertes oder unsubstituiertes Naphthyl bezeichnen, und
b) einer oder mehreren Phosphonatverbindung(en) der folgenden Formel 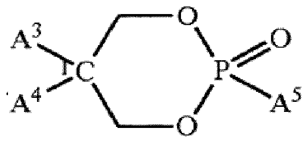 wobei A³ und A⁴ unabhängig Methyl oder Ethyl bezeichnen und A⁵ eine gerade oder verzweigtkettige Alkylgruppe mit 1 bis 4 Kohlenstofifatomen oder eine Phenyl- oder Benzylgruppe mit bis zu 3 Methylgruppen bezeichnet, und
c) Alkyl- oder Arylphosphonsäuren, wobei Alkyl eine gerade oder verzweigtkettige Alkylgruppe mit 1 bis 4 Kohlenstoffatomen bezeichnet, und Aryl ein substituiertes oder unsubstituiertes Benzyl, substituiertes oder unsubstituiertes Phenyl, substituiertes oder unsubstituiertes Naphthyl oder ein Salz oder Ester der vorgenannten Phosphonsäure bezeichnet.

8. Verfahren nach einem der vorhergehenden Ansprüche, wobei die 1,3,5-Triazinverbindung eine 1,3,5-Triazinverbindung oder ein Gemisch von zwei oder mehr 1,3,5-Triazinverbindungen ist, ausgewählt aus Tris-2-hydroxyethylisocyanorat, Melamin, Melamincyanurat, Melaminphosphat, Poly-[2,4-(piperazin-1,4-yl)-6-(morpholin-4-yl)-1,3,5-triazin], Dimelaminphosphat, Melaminpyrophosphat und gehinderten Aminverbindungen der Formel I, II, IIA und III,
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III),
wobei in dem Tetraamin von Formel I
R₁ und R₂ den s-Triazinrest E bezeichnen und eines von R₃ und R₄ den s-Triazinrest E bezeichnet, wobei der andere von R₃ und R₄ ein Wasserstoff bezeichnet,
wobei E bedeutet: 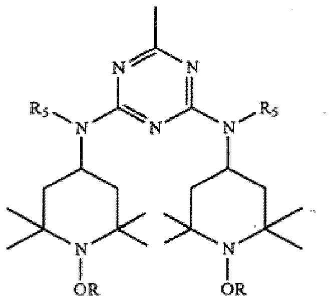 wobei R Methyl, Cyclohexyl oder Octyl bedeutet, und
R₅ ein Alkyl mit 1 bis 12 Kohlenstofifatomen bezeichnet,
wobei in der Verbindung der Formel II oder IIA, wenn R Cyclohexyl oder Octyl bezeichnet, jedes von T und T₁ ein Tetraamin bezeichnet, das durch R₁-R₄ wie in Formel I definiert substituiert ist,
wobei
(1) einer der s-Triazinreste E in jedem Tetraamin durch die Gruppe E₁ ausgetauscht ist, welche eine Brücke zwischen zwei Tetraaminen T und T₁ bildet, oder
(2) die Gruppe E₁ beide Enden in dem gleichen Tetraamin T wie in Formel IIA aufweisen kann, wobei zwei der E-Reste des Tetraamins durch eine E₁-Gruppe ausgetauscht sind, oder
(3) alle drei s-Triazinsubstituenten des Tetraamins T E₁ bezeichnen können, derart, dass ein E₁-Rest die Bindung zwischen T und T₁ umfasst und ein zweiter E₁-Rest beide Enden im Tetraamin T hat,
und
E₁ bedeutet:

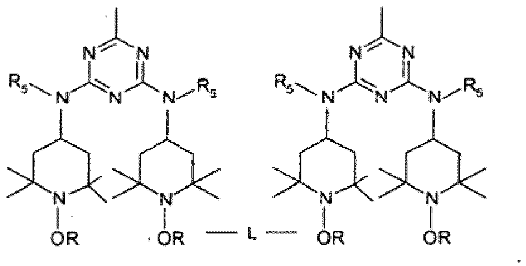

9. Verfahren nach Anspruch 7 oder 8, wobei die Phosphorverbindung eine Phosphonatverbindung wie in Teil a) von Anspruch 7 definiert und/oder eine Verbindung wie in Teil b) von Anspruch 7 definiert ist.

10. Polyolefinschaum, erhältlich durch das Verfahren nach einem der Ansprüche 1 bis 9.

11. Halogenfreier flammhemmender Polyolefinschaum mit niedriger Dichte nach Anspruch 10, welcher eine Dichte von 50 kg/m³ oder niedriger aufweist, bevorzugt 28 kg/m³ oder niedriger.

12. Polyolefinschaum nach Anspruch 10 oder 11, wobei die Phosphorverbindung wie in Anspruch 7 oder 9 definiert ist und die Triazinverbindung wie in Anspruch 8 definiert ist.

13. Polyoelfinschaum nach einem der Ansprüche 10 bis 12, wobei der Schaum in Form einer Folie/Bahn, eines Blocks, einer Platte oder einer Folie vorliegt, die jeweils in Form einer Rolle vorliegen können.

14. Schichtstruktur, welche den Polyolefinschaum nach einem der Ansprüche 10 bis 13 als mindestens eine Schicht enthält.

15. Verwendung des Schaums nach einem der Ansprüche 10 bis 13 zur Schallabsorption, Stoßdämpfung, Dämpfung/Dämmung, Isolierung oder für Soft-Touch-Anwendungen, insbesondere in Automobilen, Flugzeugen und im Bausektor.

16. Verwendung nach Anspruch 15, wobei der Schaum als Verkleidung, Armstütze, Dichtung, Türverkleidung, Armaturenbrett, Bodenunterlage, Wandisolierung oder Rohrisolierung verwendet wird.

## Revendications

1. Procédé pour produire une mousse polyoléfine retardatrice de flamme sans halogène ayant une densité de 100 kg/m³ ou moins, comprenant :
le mélange de (A) 0,001 à 95,0 parties en poids d'un polymère d'oléfine et/ou d'un copolymère d'oléfine, (B) 5,0 à 99,999 parties en poids d'un retardateur de flamme sans halogène, le total de (A) et (B) étant 100 parties en poids, (C) 0,1 à 40 parties en poids d'un agent moussant, et (D) 0-10 parties en poids d'additifs, et la formation du mélange en plaque ou en feuille,
et le moussage de la plaque ou la feuille obtenue pour obtenir une mousse polyoléfine, dans laquelle le retardateur de flamme est une combinaison d'un composé phosphoré et d'un composé 1,3,5-triazine,
dans lequel le procédé comprend optionnellement une étape de réticulation qui peut être effectuée simultanément avec le moussage.

2. Procédé selon la revendication 1, dans lequel le mélange est effectué dans une extrudeuse, la réticulation optionnelle n'est pas effectuée simultanément avec le moussage, et le moussage est effectué pendant que le mélange quitte l'extrudeuse.

3. Procédé selon la revendication 1, comprenant :
a) l'introduction des composés (A), (B) et (C) et, s'il est présent, de (D) dans une extrudeuse, et extruder le mélange pour obtenir une feuille extrudée
b) la réticulation de la feuille extrudée obtenue ; et
c) le moussage de la feuille réticulée.

4. Procédé selon l'une quelconque des revendications précédentes, dans laquelle la quantité de retardateur de flamme (B) est de 5 à 30 parties en poids, de préférence de 5 à 20 parties en poids, plus préférablement de 6 à 15 parties en poids.

5. Procédé selon l'une quelconque des revendications précédentes, dans laquelle la quantité de polymère d'oléfines et/ou le copolymère d'oléfines (A) est de 70 à 95 parties en poids, de préférence de 80 à 95 parties en poids, plus préférablement de 85 à 94 parties en poids.

6. Procédé selon l'une quelconque des revendications précédentes, dans lequel la densité de la mousse polyoléfine ainsi obtenue est de 5 à 50 kg/m³, plus préférablement de 10 à 28 kg/m³.

7. Procédé selon l'une quelconque des revendications précédentes, dans lequel le composé phosphoré est le polyphosphate d'ammonium et/ou un composé ou un mélange de deux ou plus composés chimiques choisis parmi le groupe consistant en
a) un ou plusieurs composé(s) phosphonate de formule 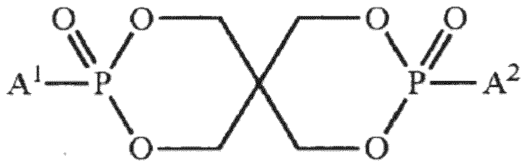 où A¹ et A² désignent indépendamment un groupe alkyle substitué ou non substitué, à chaine linéaire ou ramifiée, ayant 1 à 4 atomes de carbone, un benzyle substitué ou non substitué, un phényle substitué ou non substitué, ou un naphtanyle substitué ou non substitué, et
b) un ou plusieurs composé(s) phosphonate de la formule suivante 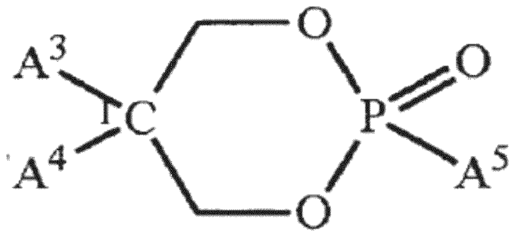 où A³ et A⁴ désignent indépendamment le méthyle ou l'éthyle et A⁵ désigne un groupe alkyle à chaine linéaire ou ramifiée ayant 1 à 4 atomes de carbone ou un groupe phényle ou benzyle ayant jusqu'à 3 groupes méthyle respectivement, et
c) des acides d'alkyle ou arylphosphoniques, où un alkyle désigne un groupe alkyle à chaine linéaire ou ramifiée ayant 1 à 4 atomes de carbone, et un aryle désigne un benzyle substitué ou non substitué, un phényle substitué ou non substitué, ou un naphtanyle substitué ou non substitué, ou un sel ou ester de l'acide phosphonique mentionné précédemment.

8. Procédé selon l'une quelconque des revendications précédentes, dans lequel le composé 1,3,5-triazine est un composé 1,3,5-triazine ou un mélange de deux ou plus composé(s) 1,3,5-triazine choisis parmi le tris-2-hydroxyéthyl isocyanurate, la mélamine, le cyanurate de mélamine, le phosphate de mélamine, la poly-[2,4-(piperazin-1,4-yl)-6-(morpholin-4-yl)-1,3,5-triazine], le phosphate de dimélamine, le pyrophosphate de mélamine, et des composés aminés de formule I, II, IIA et III :
R₁NH-CH₂CH₂CH₂NR₂CH₂CH₂NR₃CH₂CH₂CH₂NHR₄ (I)
T-E₁-T₁ (II)
T-E₁ (IIA)
G-E₁-G₁-E₁-G₂ (III),
où dans la tétraamine de formule I
R₁ et R₂ désignent le fragment E de la s-triazine, et un parmi R₃ et
R₄ désigne le fragment E de la s-triazine, avec l'autre parmi R₃ et
R₄ désignant un hydrogène,
E désigne 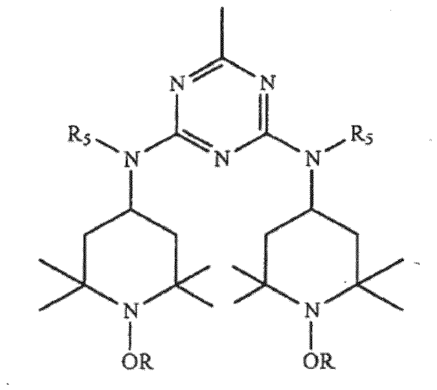 R désigne un méthyle, cyclohéxyle ou octyle,
R₅ désigne un alkyle ayant 1 à 12 atomes de carbone,
où dans le composé de formule II ou IIA, si R désigne le cyclohéxyle ou l'octyle, chacun parmi T et T₁ désigne une tétraamine substituée par R₁-R₄ tel que défini dans la formule I, où
(1) un des fragments E de s-triazine dans chaque tétraamine est remplacé par le groupe E₁, qui forme un pont entre deux tétraamines T et T₁, ou
(2) le groupe E₁ peut avoir les deux terminaux dans la même tétraamine T comme dans la formule IIA, où deux des fragments E de la tétraamine sont remplacées par un groupe E₁, ou
(3) tous les trois substituants s-triazine de la tétraamine T peuvent désigner E₁, de sorte que ce résidu E₁ comprend la liaison entre T et T₁ et un deuxième résidu E₁ a ses deux terminaux dans la tétraamine T,
et
E₁ désigne

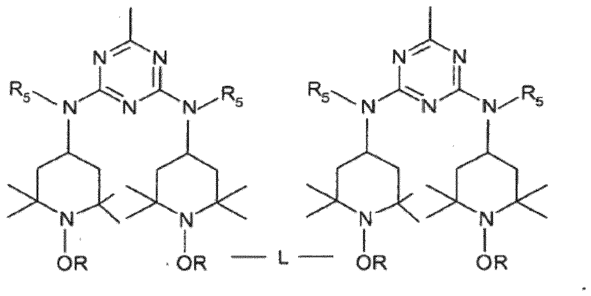

9. Procédé selon la revendication 7 ou 8, dans lequel le composé phosphoré est un composé phosphonate tel que défini dans la partie a) de la revendication 7 et/ou un composé tel que défini dans la partie b) de la revendication 7.

10. Mousse polyoléfine pouvant être obtenue par le procédé selon l'une quelconque des revendications 1 à 9.

11. Mousse polyoléfine retardatrice de flamme sans halogène à faible densité selon la revendication 10, ayant une densité de 50kg/m³ ou moins, préférablement 28 kg/m³ ou moins.

12. Mousse polyoléfine selon la revendication 10 ou 11, dans laquelle le composé phosphoré est défini selon la revendication 7 ou 9, et le composé triazine est défini selon la revendication 8.

13. Mousse polyoléfine selon l'une quelconque des revendications 10 à 12, dans lequel la mousse est présente sous la forme d'une feuille, d'un bloc, d'une plaque ou d'un film, qui peut être respectivement présent sous forme d'un rouleau.

14. Stratifié comprenant la mousse polyoléfine selon l'une quelconque des revendications 10 à 13 à au moins une couche.

15. Utilisation de la mousse selon l'une quelconque des revendications 10 à 13 pour l'absorption du son, l'absorption de choc, l'amortissement, l'isolation ou les applications soft touch, particulièrement dans des automobiles, des avions, et dans le secteur de la construction.

16. Utilisation selon la revendication 15, dans laquelle la mousse est utilisée comme revêtement, accoudoir, joint, panneau de porte, tableau de bord, sous-couche pour les sols, isolation des murs ou isolation de tube.
